# EUROPEAN PATENT APPLICATION

(11) **EP 2 784 567 A1**
(43) Date of publication of application: **01.10.2014**
(21) Application number: 14160870.3
(22) Date of filing: 20.03.2014
(51) Int. Cl.: G02B 26/08

(54) **Vibrating mirror element**

(30) Priority: 29.03.2013 JP 2013071810
(71) Applicant: Funai Electric Co., Ltd., Daito-shi, Osaka 574-0013 (JP)
(72) Inventor: Takemoto, Seiji, Daito-shi, Osaka 574-0013 (JP)
(74) Representative: Grünecker, Kinkeldey, Stockmair & Schwanhäusser

(57) **Abstract**

A vibrating mirror element (110) includes a mirror portion (110a) including a reflection surface reflecting light, a supporting portion (111a, 111b, 112a, 112b) connected to the mirror portion, supporting the mirror portion to be capable of vibrating about an axis line, and a drive portion (113a, 113b) connected with the supporting portion, drivingly vibrating the mirror portion through the supporting portion. The mirror portion is formed such that at least the reflection surface is in a curved shape.

## Description

### BACKGROUND OF THE INVENTION

### Field of the Invention

The present invention relates to a vibrating mirror element, and more particularly, it relates to a vibrating mirror element including a mirror portion.

### Description of the Background Art

A vibrating mirror element including a mirror portion is known in general, as disclosed in Japanese Patent Laying-Open No. 2012-198298, for example.

The aforementioned Japanese Patent Laying-Open No. 2012-198298 discloses a vibrating mirror element including a mirror portion including a reflection surface reflecting light, a torsion bar spring (supporting portion) connected to the mirror portion, supporting the mirror portion to be capable of vibrating about an axis line, and a drive portion connected with the torsion bar spring, drivingly vibrating the mirror portion through the torsion bar spring. This vibrating mirror element is provided with reinforcing ribs reinforcing the mirror portion on a surface opposite to the reflection surface of the mirror portion. In this vibrating mirror element, the stiffness of the mirror portion is increased by the reinforcing ribs, and deformation of the mirror portion is suppressed when the mirror portion is drivingly vibrated.

In the vibrating mirror element described in the aforementioned Japanese Patent Laying-Open No. 2012-198298, however, the reinforcing ribs are provided in the mirror portion to increase the stiffness, and hence the weight of the mirror portion is disadvantageously increased, as compared with the case where no reinforcing rib is provided. Therefore, in the aforementioned vibrating mirror element, the reinforcing ribs are additionally provided, whereby the resonance frequency (the vibration speed of the mirror portion) is reduced, and consequently the drive performance of the vibrating mirror element is reduced.

### SUMMARY OF THE INVENTION

The present invention has been proposed in order to solve the aforementioned problem, and an object of the present invention is to provide a vibrating mirror element and a projector each in which deformation of a mirror portion can be suppressed while a reduction in the drive performance of the vibrating mirror element resulting from addition of reinforcing ribs or the like to the mirror portion is suppressed.

A vibrating mirror element according to an aspect of the present invention includes a mirror portion including a reflection surface reflecting light, a supporting portion connected to the mirror portion, supporting the mirror portion to be capable of vibrating about an axis line, and a drive portion connected with the supporting portion, drivingly vibrating the mirror portion through the supporting portion, while the mirror portion is formed such that at least the reflection surface is in a curved shape.

As hereinabove described, the vibrating mirror element according the aspect of the present invention is provided with the mirror portion in which at least the reflection surface is in the curved shape, whereby the stiffness of the mirror portion can be increased as compared with the case where the reflection surface is flat, and hence deformation of the mirror portion can be suppressed when the mirror portion is drivingly vibrated. Furthermore, at least the reflection surface is in the curved shape, whereby the stiffness of the mirror portion can be improved, and hence no reinforcing rib may be provided on the mirror portion, or the thickness of the mirror portion may not be increased. Thus, an increase in the weight of the mirror portion can be suppressed. Consequently, a reduction in the resonance frequency (the vibration speed of the mirror portion) resulting from addition of reinforcing ribs or the like to the mirror portion can be suppressed. Therefore, in the vibrating mirror element according to the present invention, the deformation of the mirror portion can be suppressed while a reduction in the drive performance of the vibrating mirror element resulting from the addition of the reinforcing ribs or the like to the mirror portion is suppressed.

In the aforementioned vibrating mirror element according to the aspect, the mirror portion is preferably formed such that at least the reflection surface is in an arcuate shape having a prescribed curvature. According to this structure, the mirror portion is formed in the arcuate shape, whereby the stiffness of the mirror portion can be improved while unevenness in the reflection characteristics of the mirror portion is suppressed, unlike the case where the mirror portion is formed in an irregularly curved shape.

In the aforementioned vibrating mirror element according to the aspect, the mirror portion is preferably formed such that at least the reflection surface is in a spherical shape having a prescribed curvature. According to this structure, the mirror portion is formed in the spherical shape, whereby the stiffness of the mirror portion can be further improved while the unevenness in the reflection characteristics of the mirror portion is further suppressed.

In the aforementioned structure having the mirror portion formed in the arcuate shape, the reflection surface is preferably formed in the arcuate shape having the prescribed curvature to convexly protrude to the side of the mirror portion including the reflection surface. As described above, the reflection surface diverging and reflecting the light to the side of the mirror portion including the reflection surface, convexly protruding is provided, and the light previously converged in order to adjust the degree of divergence of the light reflected by the reflection surface is emitted to the convex reflection surface, unlike the case where a reflection surface converging and reflecting the light to the side of the mirror portion including the reflection surface, concavely protruding is provided, and light previously diffused in order to adjust the degree of convergence of the light reflected by the reflection surface is emitted to the concave reflection surface. Thus, the converged light can be reflected by the convex reflection surface, and hence the area of the reflection surface reflecting the converged light can be reduced, unlike the case where the reflection surface reflects the diffused light. Consequently, the reflection surface of the mirror portion can be compactly formed.

In the aforementioned vibrating mirror element according to the first aspect, the axis line preferably passes through the center of the mirror portion, and the mirror portion is preferably formed to be line-symmetric with respect to the axis line in a plan view. According to this structure, force of the same magnitude acts on the mirror portion line-symmetric with respect to the axis line passing through the center of the mirror portion when the mirror portion is vibrated, and hence the deformation of the mirror portion can be further suppressed, as compared with the case where the mirror portion is not line-symmetric with respect to the axis line passing through the center of the mirror portion in the plan view.

In the aforementioned vibrating mirror element according to the first aspect, the mirror portion is preferably formed in a circular shape in a plan view. According to this structure, the area of the mirror portion can be reduced, and hence the magnitude of the force acting on the mirror portion can be reduced when the mirror portion is vibrated, as compared with the case where the mirror portion is formed in a square shape having a side length equal to the diameter, for example. Thus, the deformation of the mirror portion can be further suppressed.

In this case, the axis line preferably passes through the center of the mirror portion formed in the circular shape in the plan view. According to this structure, force of the same magnitude can act on the mirror portion line-symmetric with respect to a straight line passing through the center of the mirror portion when the mirror portion is vibrated, and hence the deformation of the mirror portion can be suppressed.

In the aforementioned structure in which the axis line passes through the center of the mirror portion formed in the circular shape in the plan view, a pair of supporting portions are preferably provided, and the pair of supporting portions are preferably connected to the mirror portion at positions where the mirror portion formed in the circular shape and the axis line intersect with each other in directions opposite to each other. According to this structure, the mirror portion can be easily vibrated about the axis line by the pair of supporting portions.

In the aforementioned vibrating mirror element according to the aspect, the mirror portion preferably includes a non-reflection surface on a side opposite to the reflection surface reflecting the light, and the non-reflection surface is preferably formed in a curved shape corresponding to the curved shape of the reflection surface. According to this structure, an increase in the thickness of the mirror portion can be suppressed, and hence an increase in the weight of the mirror portion can be further suppressed, unlike the case where the non-reflection surface is flat.

In this case, the mirror portion is preferably formed in a curved shape having a constant cross-sectional thickness. According to this structure, the mirror portion can be drivingly vibrated in a balanced manner, as compared with a mirror portion not having a constant cross-sectional thickness.

In the aforementioned vibrating mirror element according to the first aspect, the mirror portion is preferably configured to be resonantly driven at a frequency of at least 1 kHz by the drive portion. According to this structure, the mirror portion can be vibrated at a high speed while the deformation of the mirror portion is effectively suppressed.

In this case, the drive portion preferably includes a piezoelectric layer, and the mirror portion is preferably configured to be resonantly driven at the frequency of at least 1 kHz by applying a voltage to the piezoelectric layer. According to this structure, the mirror portion can be easily vibrated at a high speed by the piezoelectric layer.

In the aforementioned vibrating mirror element according to the first aspect, a pair of drive portions are preferably provided, and the pair of drive portions are preferably configured to hold the mirror portion therebetween at prescribed intervals from the mirror portion. According to this structure, the mirror portion can be vibrated at a high speed in a state where the mirror portion is stabilized by the pair of drive portions.

In this case, the supporting portion is preferably configured to be deformable, the pair of drive portions are preferably configured to deform the supporting portion by deflection, and the mirror portion is preferably configured to be resonantly driven by deforming the supporting portion by the pair of drive portions. According to this structure, the mirror portion can be easily vibrated at a high speed by the drive portions and the supporting portion.

In the aforementioned structure having the mirror portion formed in the arcuate shape, the curvature of the reflection surface is preferably at least 0.91 × 1000 (mm⁻¹) and not more than 1.1 × 1000 (mm⁻¹). According to this structure, a variation in the size of a spot of the light reflected by the mirror portion resulting from a variation in the mirror portion in manufacturing can be suppressed while the stiffness of the mirror portion is ensured.

According to the present invention, as hereinabove described, the deformation of the mirror portion can be suppressed while the reduction in the drive performance of the vibrating mirror element resulting from the addition of the reinforcing ribs or the like to the mirror portion is suppressed.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the structure of a projector according to an embodiment of the present invention;
Fig. 2 is a schematic view showing an optical system of the projector according to the embodiment of the present invention;
Fig. 3 is a diagram showing a laser beam scanning portion of the projector according to the embodiment of the present invention;
Fig. 4 is a diagram showing a MEMS mirror of the projector according to the embodiment of the present invention;
Fig. 5 is a sectional view of the MEMS mirror of the projector according to the embodiment of the present invention;
Fig. 6 is a diagram showing a spot of a laser beam in the vicinity of an end of a projection area in a horizontal direction in the case where the curvature of the MEMS mirror of the projector according to the embodiment of the present invention is 0 (mm⁻¹) ;
Fig. 7 is a diagram showing a spot of the laser beam in the vicinity of the end of the projection area in the horizontal direction in the case where the curvature of the MEMS mirror of the projector according to the embodiment of the present invention is 0.67 × 10⁻³ (mm⁻¹);
Fig. 8 is a diagram showing a spot of the laser beam in the vicinity of the end of the projection area in the horizontal direction in the case where the curvature of the MEMS mirror of the projector according to the embodiment of the present invention is 1.0 × 10⁻³ (mm⁻¹) ;
Fig. 9 is a diagram showing a spot of the laser beam in the vicinity of the end of the projection area in the horizontal direction in the case where the curvature of the MEMS mirror of the projector according to the embodiment of the present invention is 1.25 × 10⁻³ (mm⁻¹); and
Fig. 10 is a diagram showing the relationship between the curvature of the MEMS mirror of the projector according to the embodiment of the present invention and the shape of the spot of the laser beam.

### DESCRIPTION OF THE PREFERRED EMBODIMENTS

An embodiment of the present invention is hereinafter described with reference to the drawings.

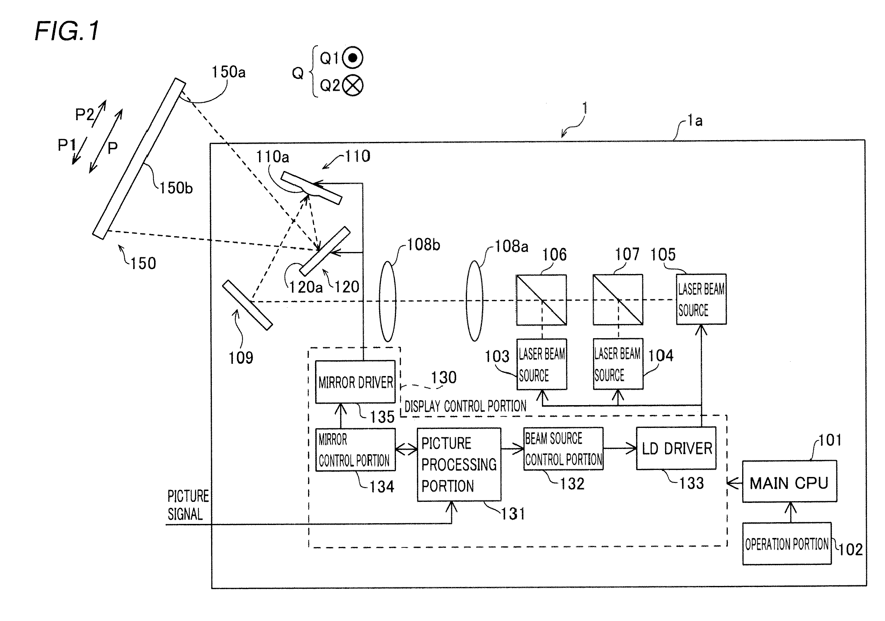

The structure of a projector 1 according to an embodiment of the present invention is now described with reference to Figs. 1 to 10.

The projector 1 according to the embodiment of the present invention includes a main CPU 101, an operation portion 102, three (blue (B), green (G), and red (R)) laser beam sources 103 to 105, two polarizing beam splitters 106 and 107, and lenses 108a and 108b, as shown in Fig. 1. The projector 1 further includes a mirror 109, laser beam scanning portions 110 and 120, and a display control portion 130. The laser beam scanning portion 110 includes a MEMS (Micro Electro Mechanical System) mirror 110a. The laser beam scanning portion 120 includes a MEMS mirror 120a. The laser beam scanning portions 110 and 120 are configured to scan laser beams on a projection area 150. The display control portion 130 includes a picture processing portion 131, a beam source control portion 132, an LD (laser diode) driver 133, a mirror control portion 134, and a mirror driver 135. The projector 1 is configured to output an image on the basis of a picture signal input in the picture processing portion 131. The laser beam sources 103 to 105 are examples of the "light generation portion" in the present invention. The lens 108b is an example of the "lens portion" in the present invention. The laser beam scanning portion 110 is an example of the "vibrating mirror element" in the present invention. The MEMS mirror 110a is an example of the "mirror portion" in the present invention.

The main CPU 101 is configured to control each portion of the projector 1. The operation portion 102 is provided to accept operations of turning on the projector 1, changing the projection angle of the image, changing the resolution of the image, etc.

The laser beam source 103 is configured to emit a blue laser beam to the mirror 109 through the beam splitter 106 and the lenses 108a and 108b. The laser beam source 104 is configured to emit a green laser beam to the mirror 109 through the beam splitters 106 and 107 and the lenses 108a and 108b. The laser beam source 105 is configured to emit a red laser beam to the mirror 109 through the beam splitters 106 and 107 and the lenses 108a and 108b.

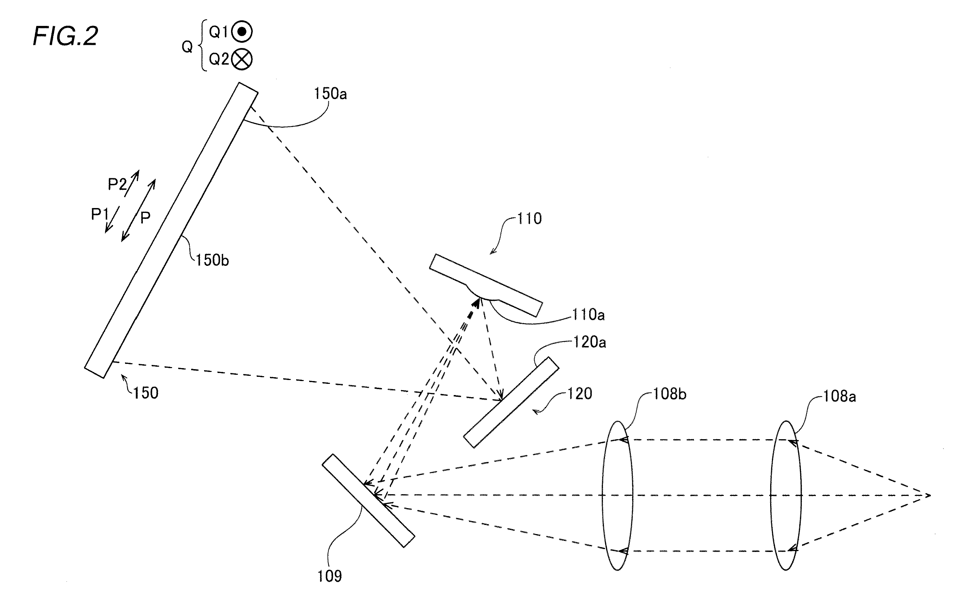

The lens 108a is configured to collimate the laser beams emitted from the laser beam sources 103 to 105, as shown in Fig. 2. The lens 108a is constituted by a collimator lens.

According to this embodiment, the lens 108b is configured to converge (condense) the beams traveling from the laser beam sources 103 to 105 to the MEMS mirror 110a, as shown in Fig. 2. The lens 108b is constituted by a condensing lens. The lens 108b is arranged on an optical path for the beams traveling from the laser beam sources 103 to 105 to the MEMS mirror 110a, as shown in Fig. 1. Specifically, the lens 108b is arranged at a position between the lens 108a and the mirror 109.

The mirror 109 is configured to reflect the laser beams emitted from the laser beam sources 203 to 105 toward the MEMS mirror 110a, as shown in Figs. 1 and 2. The mirror 109 is arranged in a state of being inclined at a prescribe angle with respect to the traveling direction of the laser beams emitted from the laser beam sources 103 to 105.

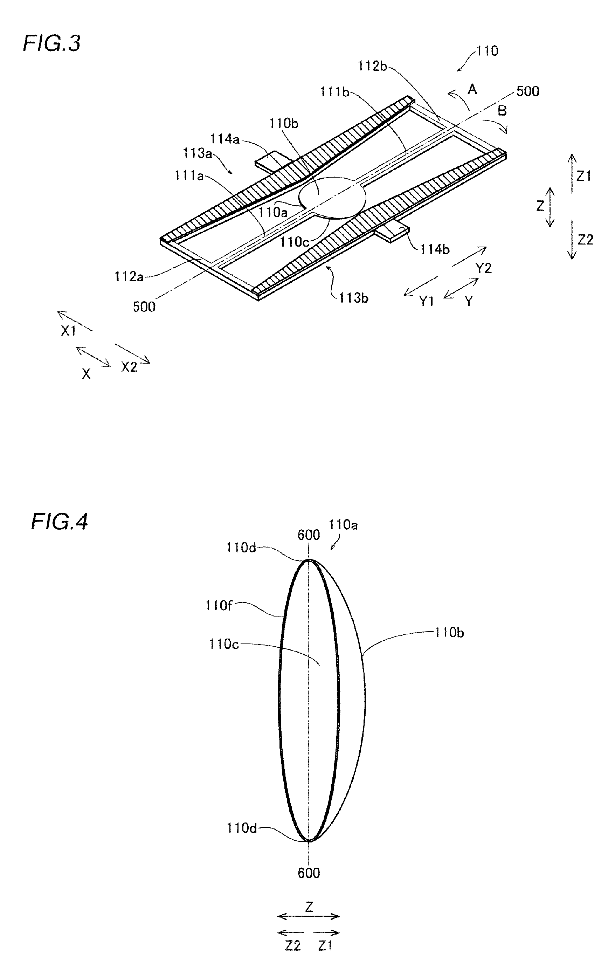

According to this embodiment, the laser beam scanning portion 110 includes the MEMS mirror 110a including a reflection surface 110b reflecting the beams, a torsion bar 111a (111b) and a bar 112a (112b) connected to the MEMS mirror 110a, supporting the MEMS mirror 110a to be capable of vibrating about an axis line (500-500 line), and drive portions 113a and 113b connected with the torsion bar 111a (111b) and the bar 112a (112b), drivingly vibrating the MEMS mirror 110a through the torsion bar 111a (111b) and the bar 112a (112b), as shown in Fig. 3. A pair of torsion bars 111a and 111b, a pair of bars 112a and 112b, and a pair of drive portions 113a and 113b are provided. The laser beam scanning portion 110 includes fixing portions 114a and 114b on the X1 side of the drive portion 113a and the X2 side of the drive portion 113b, respectively. The MEMS mirror 110a is configured to be fixed to a projector body (housing) 1a (see Fig. 1) by the fixing portions 114a and 114b. As shown in Fig. 1, the laser beams scanned by the laser beam scanning portion 110 (MEMS mirror 110a) are projected on the projection area 150. The torsion bars 111a and 111b are examples of the "supporting portion" in the present invention. The bars 112a and 112b are examples of the "supporting portion" in the present invention.

The MEMS mirror 110a is configured to be driven along one axis (direction X (see Fig. 3)) and scan the laser beams in a horizontal direction (direction P (see Fig. 1)). The MEMS mirror 110a is configured to scan the horizontal direction at a high speed by resonance driving. The laser bean scanning portion 110 is configured to be driven at a frequency of about 25 kHz and resonate the MEMS mirror 110a and the torsion bar 111a (111b).

As shown in Fig. 1, the laser beams scanned by the laser beam scanning portion 120 (MEMS mirror 120a) are projected on the projection area 150. The MEMS mirror 120a is configured to be driven along one axis and scan the laser beams in a vertical direction (direction Q (see Fig. 1)). The MEMS mirror 120a is configured to scan the vertical direction at a low speed by DC driving. The laser beam scanning portion 120 is configured to be driven at a frequency of about 60 Hz and not to resonate the MEMS mirror 120a and torsion bars connected to the MEMS mirror 120a. The remaining structure of the laser beam scanning portion 120 is similar to that of a publicly known laser beam scanning portion, and hence the description is omitted.

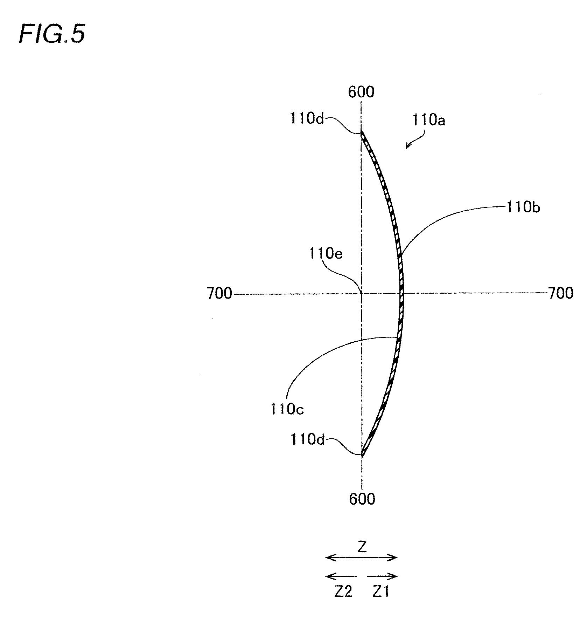

According to this embodiment, the MEMS mirror 110a is formed such that the reflection surface 110b is in a curved shape, as shown in Figs. 4 and 5. Specifically, the MEMS mirror 110a is formed such that the reflection surface 110b is in a substantially arcuate shape having a prescribed curvature (1.0 × 10⁻³ (mm⁻¹), for example). More specifically, the MEMS mirror 110a is formed such that the reflection surface 110b is in a substantially spherical shape having the prescribed curvature. The reflection surface 110b is formed to convexly protrude to a side (Z1 side) of the MEMS mirror 110a including the reflection surface 110b. The MEMS mirror 110a is formed in a substantially circular shape in a plan view, as shown in Fig. 3. Furthermore, the MEMS mirror 110a is formed to be substantially line-symmetric with respect to the axis line (500-500 line) passing through the center of the MEMS mirror 110a formed in the substantially circular shape in a plan view. The reflection surface 110b includes a non-reflection surface 110c on a side opposite to (Z2 side) the reflection surface 110b reflecting light, as shown in Figs. 4 and 5.

The non-reflection surface 110c is formed in a curved shape corresponding to the curved shape of the reflection surface 110b, as shown in Fig. 5. In other words, the MEMS mirror 110a has a substantially constant thickness in a sectional view. The MEMS mirror 110a is formed to be line-symmetric with respect to a straight line (700-700 line) passing through the central point 110e of the MEMS mirror 110a on a straight line (600-600 line) passing through two ends 110d of the MEMS mirror 110a, being perpendicular to this straight line. The MEMS mirror 110a is formed in the substantially circular shape (see Fig. 4) in a plan view.

The two ends 110d are farthest from each other on an edge 110f of the MEMS mirror 110a in a plan view. The laser beams converged (condensed) by the lens 108b (see Fig. 1), reflected by the mirror 109 are emitted to a substantially central portion (an intersection of the reflection surface 110b and the 700-700 line) of the MEMS mirror 110a.

The MEMS mirror 110a is made of silicon, for example. The MEMS mirror 110a is formed by etching a base material made of silicon. The reflection surface 110b is formed by depositing unshown metal (aluminum, for example).

The torsion bars 111a and 111b are formed to extend in a direction Y, as shown in Fig. 3. First ends of the torsion bars 111a and 111b are connected to the MEMS mirror 110a. The pair of torsion bars 111a and 111b are connected to the MEMS mirror 110a at positions where the MEMS mirror 110a formed in the substantially circular shape and the axis line (500-500 line) intersect with each other in directions opposite to each other. Second ends of the torsion bars 111a and 111b are connected to the bars 112a and 112b. The torsion bars 111a and 111b are coupled to the MEMS mirror 110a such that the MEMS mirror 110a can be vibrated about the axis line (500-500 line) by deformation of the torsion bars 111a and 111b. The torsion bars 111a and 111b are configured to be torsionally deformable.

The bars 112a and 112b are formed to extend in the direction X, as shown in Fig. 3. The vicinities of central portions of the bars 112a and 112b are connected with outer ends of the torsion bars 111a and 111b in the direction Y. The bars 112a and 112b are configured to be deflectable.

The drive portion 113a is connected to ends of the bars 112a and 112b on the X1 side, as shown in Fig. 3. The drive portion 113b is connected to ends of the bars 112a and 112b on the X2 side. The pair of drive portions 113a and 113b are arranged to hold the MEMS mirror 110a therebetween at prescribed intervals from the MEMS mirror 110a. The drive portions 113a and 113b each are provided with an unshown piezoelectric layer for driving. The drive portions 113a and 113b are configured to be deflected by applying a voltage to the piezoelectric layer for driving. The drive portion 113a (113b) is deflected, whereby the torsion bar 111a (111b) and the bar 112a (112b) are deformed. Thus, the MEMS mirror 110a is vibrated (resonantly driven) in a direction A or B about the axis line (500-500 line). The MEMS mirror 110a is configured to be inclined beyond the inclinations of the bars 112a and 112b by resonance. The frequency of the voltage applied to the drive portions 113a and 113b is substantially identical to the resonance frequencies of the MEMS mirror 110a and the torsion bars 111a and 111b. The resonance frequencies of the MEMS mirror 110a and the torsion bars 111a and 111b are substantially identical to each other, whereby the MEMS mirror 110a and the torsion bars 111a and 111b are resonated. Thus, torsion force in the direction A or B is applied to the torsion bars 111a and 111b, and the MEMS mirror 210a is vibrated in the direction A or B at an angle larger than the inclination angles of the bars 112a and 112b.

The picture processing portion 131 is configured to control the projection of the image on the basis of the picture signal externally input. Specifically, the picture processing portion 131 is configured to control the driving of the laser beam scanning portions 110 and 120 through the mirror control portion 134 on the basis of the picture signal externally input and control the emission of the laser beams from the laser beam sources 103 to 105 through the beam source control portion 132.

The beam source control portion 132 is configured to control the LD driver 133 on the basis of control performed by the picture processing portion 131 and control the emission of the laser beams from the laser beam sources 103 to 105. Specifically, the beam source control portion 132 is configured to control the laser beam sources 103 to 105 to emit the laser beams of colors corresponding to pixels of the image in synchronization with the scanning timing of the laser beam scanning portions 110 and 120.

The mirror control portion 134 is configured to control the mirror driver 135 on the basis of the control performed by the picture processing portion 131 and control the driving of the laser beam scanning portions 110 and 120.

According to this embodiment, as hereinabove described, the laser beam scanning portion 110 is provided with the MEMS mirror 110a having the reflection surface 110b in the curved shape. Thus, the stiffness of the MEMS mirror 110a can be increased as compared with the case where the reflection surface 110b is flat, and hence deformation of the MEMS mirror 110a can be suppressed when the MEMS mirror 110a is drivingly vibrated. Furthermore, at least the reflection surface 110b is in the curved shape, whereby the stiffness of the MEMS mirror 110a can be improved, and hence no reinforcing rib may be provided on the MEMS mirror 110a, or the thickness of the MEMS mirror 110a may not be increased. Thus, an increase in the weight of the MEMS mirror 110a can be suppressed. Consequently, a reduction in the resonance frequency (the vibration speed of the MEMS mirror 110a) resulting from addition of reinforcing ribs or the like to the MEMS mirror 110a can be suppressed. Therefore, in the projector 1 according to the present invention, the deformation of the MEMS mirror 110a can be suppressed while a reduction in the drive performance of the laser beam scanning portion 110 resulting from the addition of the reinforcing ribs or the like to the MEMS mirror 110a is suppressed.

According to this embodiment, as hereinabove described, the reflection surface 110b is formed in the substantially arcuate shape having the prescribed curvature. Thus, the stiffness of the MEMS mirror 110a can be improved while unevenness in the reflection characteristics of the MEMS mirror 110a is suppressed, unlike the case where the MEMS mirror 110a is formed in an irregularly curved shape.

According to this embodiment, as hereinabove described, the reflection surface 110b is formed in the substantially spherical shape having the prescribed curvature. Thus, the stiffness of the MEMS mirror 110a can be further improved while the unevenness in the reflection characteristics of the MEMS mirror 110a is further suppressed.

According to this embodiment, as hereinabove described, the lens 108b is arranged on the optical path for the beams traveling from the laser beam sources 103 to 105 to the MEMS mirror 110a and is configured to converge the beams traveling from the laser beam sources 103 to 105 to the MEMS mirror 110a. Thus, the beams diffused by the reflection surface 110b in the curved shape can be converged by the lens 108b, and hence a reduction in the resolution of the image can be suppressed.

According to this embodiment, as hereinabove described, the lens 108b is configured to converge the beams traveling from the laser beam sources 103 to 105 to the MEMS mirror 110a, and the reflection surface 110b convexly protruding to the side of the MEMS mirror 110a including the reflection surface 110b is formed. As described above, the reflection surface 110b diverging and reflecting the beams to the side of the MEMS mirror 110a including the reflection surface 110b, convexly protruding is provided, and the beams previously converged by the lens 108b in order to adjust the degree of divergence of the beams reflected by the reflection surface 110b are emitted to the convex reflection surface 110b. Thus, the beams converged by the lens 108b can be reflected by the convex reflection surface 110b, and hence the area of the reflection surface 110b reflecting the beams converged by the lens 108b can be reduced, unlike the case where the reflection surface 110b reflects diffused beams. Consequently, the reflection surface 110b of the MEMS mirror 110a can be compactly formed.

According to this embodiment, as hereinabove described, the MEMS mirror 110a is formed to be substantially line-symmetric with respect to the axis line (500-500 line) passing through the center of the MEMS mirror 110a in a plan view. Thus, force of the same magnitude acts on the MEMS mirror 110a substantially line-symmetric with respect to the axis line (500-500 line) passing through the center of the MEMS mirror 110a when the MEMS mirror 120a is vibrated, and hence the deformation of the MEMS mirror 110a can be further suppressed, as compared with the case where the MEMS mirror 110a is not substantially line-symmetric with respect to the axis line (500-500 line) passing through the center of the MEMS mirror 110a in a plan view.

According to this embodiment, as hereinabove described, the MEMS mirror 110a is formed in the substantially circular shape in a plan view. Thus, the area of the MEMS mirror 110a can be reduced, and hence the magnitude of the force acting on the MEMS mirror 110a can be reduced when the MEMS mirror 110a is vibrated, as compared with the case where the MEMS mirror is formed in a square shape having a side length equal to the diameter, for example. Thus, the deformation of the MEMS mirror 110a can be further suppressed.

According to this embodiment, as hereinabove described, the axis line (500-500 line) passes through the center of the MEMS mirror 110a formed in the substantially circular shape in a plan view. Thus, force of substantially the same magnitude can act on the MEMS mirror 110a substantially line-symmetric with respect to the axis line (500-500 line) passing through the center of the MEMS mirror 110a when the MEMS mirror 110a is vibrated, and hence the deformation of the MEMS mirror 110a can be suppressed.

According to this embodiment, as hereinabove described, the pair of torsion bars 111a and 111b and the pair of bars 112a and 112b are connected to the MEMS mirror 110a at the positions where the MEMS mirror 110a formed in the substantially circular shape and the axis line (500-500 line) intersect with each other in the directions opposite to each other. Thus, the MEMS mirror 110a can be easily vibrated about the axis line (500-500 line) by the pair of torsion bars 111a and 11b and the pair of bars 112a and 112b.

According to this embodiment, as hereinabove described, the MEMS mirror 110a is provided with the non-reflection surface 110c on the side opposite to the reflection surface 110b, and the non-reflection surface 110c is formed in the curved shape corresponding to the curved shape of the reflection surface 110b. Thus, an increase in the thickness of the MEMS mirror 110a can be suppressed, and hence an increase in the weight of the MEMS mirror 110a can be further suppressed, unlike the case where the non-reflection surface 110c is flat.

According to this embodiment, as hereinabove described, the MEMS mirror 110a is formed in the curved shape having the substantially constant cross-sectional thickness. Thus, the MEMS mirror 110a can be drivingly vibrated in a balanced manner, as compared with a mirror portion not having a substantially constant cross-sectional thickness.

According to this embodiment, as hereinabove described, the MEMS mirror 110a is configured to be resonantly driven at a frequency of about 25 kHz by the drive portions 113a and 113b. Thus, the MEMS mirror 110a can be vibrated at a high speed while the deformation of the MEMS mirror 110a is effectively suppressed.

According to this embodiment, as hereinabove described, the drive portions 113a and 113b each are configured to include the piezoelectric layer, and the MEMS mirror 110a is configured to be resonantly driven at a frequency of about 25 kHz by applying the voltage to the piezoelectric layer. Thus, the MEMS mirror 110a can be easily vibrated at a high speed by the piezoelectric layer.

According to this embodiment, as hereinabove described, the pair of drive portions 113a and 113b are configured to hold the MEMS mirror 110a therebetween at the prescribed intervals from the MEMS mirror 110a. Thus, the MEMS mirror 110a can be vibrated at a high speed in a state where the MEMS mirror 110a is stabilized by the pair of drive portions 113a and 113b.

According to this embodiment, as hereinabove described, the laser beam scanning portion 110 is provided with the pair of drive portions 113a and 113b deforming the torsion bar 111a (111b) and the bar 112a (112b) by deflection, and the MEMS mirror 110a is configured to be resonantly driven by deforming the torsion bar 111a (111b) and the bar 112a (112b) by the pair of drive portions 113a and 113b. Thus, the MEMS mirror 110a can be easily vibrated at a high speed by the drive portion 113a (113b), the torsion bar 111a (111b), and the bar 112a (112b).

According to this embodiment, as hereinabove described, the curvature of the reflection surface 110b is at least 0.91 × 1000 (mm⁻¹) and not more than 1.1 × 1000 (mm⁻¹). Thus, a variation in the size of a spot of the beam reflected by the MEMS mirror 110a resulting from a variation in the MEMS mirror 110a in manufacturing can be suppressed while the stiffness of the MEMS mirror 110a is ensured.

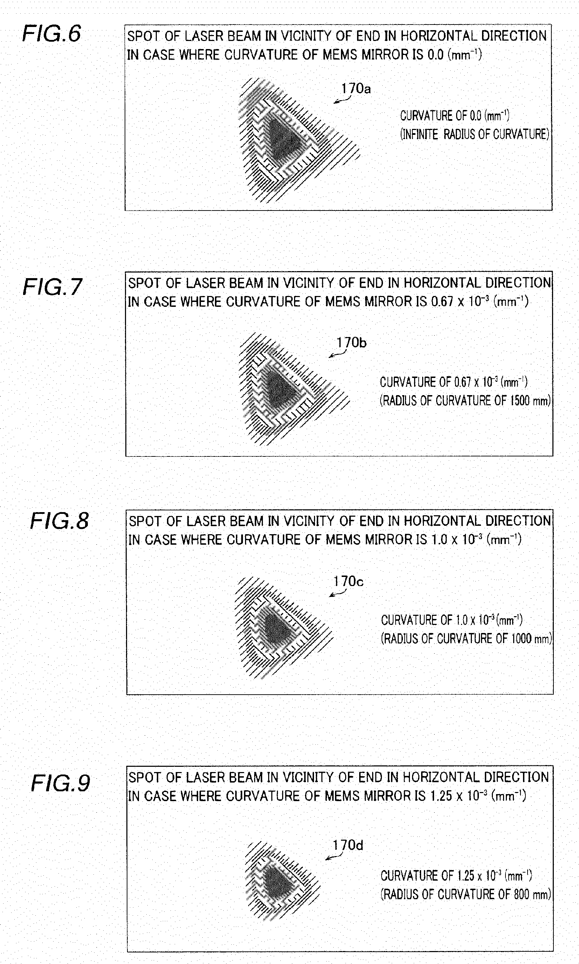

Changes of the shape of the spot of the laser beam reflected by the MEMS mirror 110a when the curvature of the reflection surface 110b of the MEMS mirror 110a is changed are now described with reference to Figs. 6 to 10.

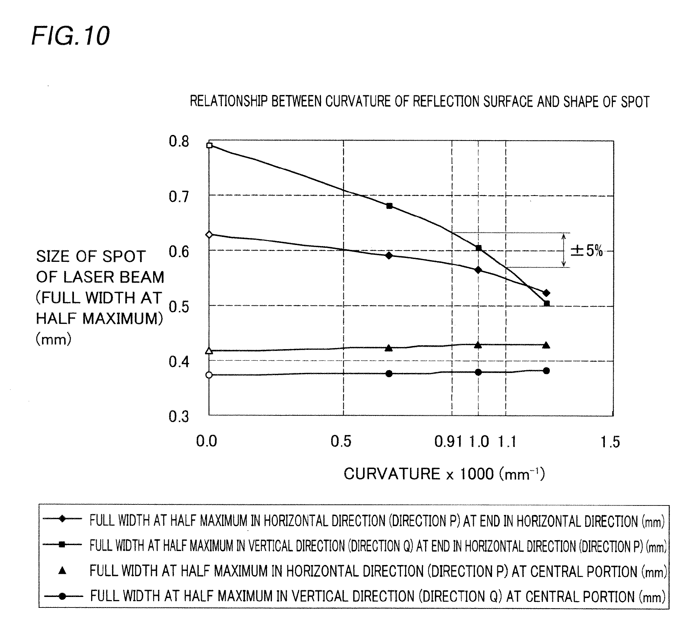

In Figs. 6 to 9, spots of the laser beam in the vicinity 150a (see Fig. 1) of an end of the projection area 150 in the horizontal direction (direction P (see Fig. 1) are shown. The size of the spot of the laser beam is expressed by the full width at half maximum of the intensity of the laser beam. The reflection surface 110b according to the present invention has the prescribed curvature, and hence in Fig. 10, the size of the spot of the laser beam is expressed by a void symbol in the case where the curvature of a reflection portion serving as a comparison value is 0 (mm⁻¹).

In Figs. 6 to 9, the shapes of the spots 170a to 170d of the laser beam in the case where the curvature of the reflection surface of the MEMS mirror is 0, 0.67 × 10⁻³, 1.0 × 10⁻³, and 1.25 × 10⁻³ (mm⁻¹) are shown. As shown in Fig. 6, the spot 170a of the laser beam is enlarged (expanded) by the deformation of the MEMS mirror 110a during the operation of the laser beam scanning portion 110 in the case where the curvature of the reflection surface 110b is 0 (mm⁻¹). As shown in Figs. 6 to 9, it has been confirmed that the deformation of the MEMS mirror 110a is further suppressed as the curvature of the reflection surface 110b is increased, whereby the spot of the laser beam reflected by the MEMS mirror 110a is shrunk. It has been confirmed that a spot (not shown) of the laser beam in the vicinity of a central portion 150b of the projection area 150 in the vertical direction (direction Q (see Fig. 1)) reflected by the MEMS mirror 110a is slightly enlarged as the curvature of the refection surface 110b is increased.

As shown in Fig. 10, it has been confirmed that the variation in the size of the spot of the laser beam resulting from a variation (dimension error) in the curvature is increased as the curvature of the reflection surface 110b (MEMS mirror 110a) is increased. In this case, it has been confirmed that the resolution of the projected image is varied by the variation in the size of the spot of the laser beam reflected by the MEMS mirror 110a.

In the case where the design value of the MEMS mirror 110a is 1.0 × 10⁻³ (mm⁻¹), the curvature of the MEMS mirror 110a is set to be larger than 0.91 × 10⁻³ (mm⁻¹) and smaller 1.1 × 10⁻³ (mm⁻¹), whereby the variation in the size of the spot of the laser beam reflected by the MEMS mirror 110a can be suppressed within ±5% at the end of the projection area 150 in the horizontal direction.

The embodiment disclosed this time must be considered as illustrative in all points and not restrictive. The range of the present invention is shown not by the above description of the embodiment but by the scope of claims for patent, and all modifications within the meaning and range equivalent to the scope of claims for patent are further included.

For example, while the laser beam scanning portion as the vibrating mirror element according to the present invention is applied to the projector in the aforementioned embodiment, the present invention is not restricted to this. According to the present invention, the vibrating mirror element may alternatively be applied to a head-up display (HUD), a head-mounted display (HMD), or the like.

While both the reflection surface and the non-reflection surface are curved in the aforementioned embodiment, the present invention is not restricted to this. According to the present invention, only the reflection surface may alternatively be curved. Furthermore, the non-reflection surface may alternatively be flat. Thus, the stiffness of the mirror portion can be further increased, and hence the deformation of the mirror portion can be further suppressed when the mirror portion is drivingly driven.

While the MEMS mirror 110a (mirror portion) is formed in the substantially spherical shape as an example of the curved shape in the aforementioned embodiment, the present invention is not restricted to this. According to the present invention, the mirror portion may alternatively be formed in a curved shape such as a substantially arcuate shape other than the substantially spherical shape or in a curved shape other than the substantially arcuate shape and the substantially spherical shape.

While the MEMS mirror (mirror portion) formed in the substantially circular shape in a plan view is provided in the aforementioned embodiment, the present invention is not restricted to this. According to the present invention, the mirror portion formed in a polygonal shape, for example, other than the substantially circular shape in a plan view may alternatively be provided.

While the MEMS mirror 110a scanning the horizontal direction of the MEMS mirror 110a (mirror portion) scanning the horizontal direction and the MEMS mirror 120a scanning the vertical direction is formed in the substantially spherical shape in the aforementioned embodiment, the present invention is not restricted to this. According to the present invention, both the MEMS mirror scanning the horizontal direction and the MEMS mirror scanning the vertical direction may alternatively be substantially spherically formed.

While the MEMS mirror (mirror portion) capable of scanning along one axis is provided in the aforementioned embodiment, the present invention is not restricted to this. According to the present invention, the mirror portion capable of scanning along two axes may alternatively be provided.

While the reflection surface convexly protruding to the side of the reflection surface of the MEMS mirror 110a (mirror portion) is provided in the aforementioned embodiment, the present invention is not restricted to this. According to the present invention, a reflection surface concavely recessed to the non-reflection surface opposite to the reflection surface of the mirror portion may alternatively be formed. In this case, the laser beams are converged (condensed) by the reflection surface concavely recessed, and hence a diverging lens as the lens 108b (lens portion) is provided, whereby the image can be properly displayed.

## Claims

1. A vibrating mirror element (110) comprising:
a mirror portion (110a) including a reflection surface reflecting light;
a supporting portion (111a, 111b, 112a, 112b) connected to the mirror portion, supporting the mirror portion to be capable of vibrating about an axis line; and
a drive portion (113a, 113b) connected with the supporting portion, drivingly vibrating the mirror portion through the supporting portion, wherein
the mirror portion is formed such that at least the reflection surface is in a curved shape.

2. The vibrating mirror element according to claim 1, wherein
the mirror portion is formed such that at least the reflection surface is in an arcuate shape having a prescribed curvature.

3. The vibrating mirror element according to claim 1 or 2, wherein
the mirror portion is formed such that at least the reflection surface is in a spherical shape having a prescribed curvature.

4. The vibrating mirror element according to claim 2 or 3, wherein
the reflection surface is formed in the arcuate shape having the prescribed curvature to convexly protrude to a side of the mirror portion including the reflection surface.

5. The vibrating mirror element according to any of claims 1 to 4, wherein
the axis line passes through a center of the mirror portion, and
the mirror portion is formed to be line-symmetric with respect to the axis line in a plan view.

6. The vibrating mirror element according to any of claims 1 to 5, wherein
the mirror portion is formed in a circular shape in a plan view.

7. The vibrating mirror element according to claim 6, wherein
the axis line passes through a center of the mirror portion formed in the circular shape in the plan view.

8. The vibrating mirror element according to claim 7, wherein
a pair of supporting portions are provided, and the pair of supporting portions are connected to the mirror portion at positions where the mirror portion formed in the circular shape and the axis line intersect with each other in directions opposite to each other.

9. The vibrating mirror element according to any of claims 1 to 8, wherein
the mirror portion includes a non-reflection surface on a side opposite to the reflection surface reflecting the light, and
the non-reflection surface (110c) is formed in a curved shape corresponding to the curved shape of the reflection surface.

10. The vibrating mirror element according to claim 9, wherein
the mirror portion is formed in a curved shape having a constant cross-sectional thickness.

11. The vibrating mirror element according to claim 1, wherein
the mirror portion is configured to be resonantly driven at a frequency of at least 1 kHz by the drive portion.

12. The vibrating mirror element according to claim 11, wherein
the drive portion includes a piezoelectric layer, and the mirror portion is configured to be resonantly driven at the frequency of at least 1 kHz by applying a voltage to the piezoelectric layer.

13. The vibrating mirror element according to any of claims 1 to 12, wherein
a pair of drive portions are provided, and
the pair of drive portions are configured to hold the mirror portion therebetween at prescribed intervals from the mirror portion.

14. The vibrating mirror element according to claim 13, wherein
the supporting portion is configured to be deformable, the pair of drive portions are configured to deform the supporting portion by deflection, and
the mirror portion is configured to be resonantly driven by deforming the supporting portion by the pair of drive portions.

15. The vibrating mirror element according to any of claims 2 to 8, wherein
a curvature of the reflection surface is at least 0.91 × 1000 (mm⁻¹) and not more than 1.1 × 1000 (mm⁻¹).
